(19) Europäisches Patentamt
European Patent Office
Office européen des brevets

(11) **EP 4 216 109 A1**

(12) **EUROPEAN PATENT APPLICATION**

(43) Date of publication:
**26.07.2023 Bulletin 2023/30**

(21) Application number: **22205216.9**

(22) Date of filing: **03.11.2022**

(51) International Patent Classification (IPC):
**G06N 5/01** (2023.01)   **G06N 7/01** (2023.01)
**G06Q 10/047** (2023.01)

(52) Cooperative Patent Classification (CPC):
**G06N 5/01; G06N 7/01;** G06Q 10/047

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **24.01.2022 JP 2022008901**

(71) Applicant: **Fujitsu Limited**
**Kawasaki-shi, Kanagawa 211-8588 (JP)**

(72) Inventor: **Kanda, Kouichi**
**Kawasaki-shi, Kanagawa, 211-8588 (JP)**

(74) Representative: **Hoffmann Eitle**
**Patent- und Rechtsanwälte PartmbB**
**Arabellastraße 30**
**81925 München (DE)**

(54) **INFORMATION PROCESSING APPARATUS, INFORMATION PROCESSING METHOD, AND INFORMATION PROCESSING PROGRAM**

(57)    An information processing apparatus including: a search unit that searches for a solution of a problem to which a constraint condition that includes two-way one-hot constraint is given, by using a first matrix based on an objective function as a weight matrix; a transition unit that changes a part of values of the solution that is a search result of the search unit in a case where the search by the search unit reaches a specific state; and a weight matrix switch unit that causes the search unit to perform the search by setting, as the weight matrix, a return matrix generated by using a penalty coefficient in the weight matrix in a case where the part of values of a plurality of variables included in the solution is changed by the transition unit, and causes the search unit to perform the search by returning the weight matrix to the first matrix when the search result made by the search unit reaches a state that satisfies the two-way one-hot constraint.

FIG. 2

**Description**

FIELD

The embodiment discussed herein is related to an information processing apparatus, an information processing method, and an information processing program.

BACKGROUND

Combination optimization problems exist in various fields in today's society. For example, in fields of manufacturing/distribution, marketing and the like, a combination of elements that optimizes or minimizes a cost is searched for. However, the combination optimization problem is known as a problem that is difficult to solve with a conventional Von Neumann computer because calculation time increases exponentially as the number of variables corresponding to the above-described elements increases.

As a method for solving a multivariable optimization problem that a von Neumann computer is not good at, there is an optimization apparatus using an Ising type energy function. Such optimization apparatus is also referred to as Ising machine, Boltzmann machine or the like. Furthermore, the energy function might also be referred to as a cost function or an objective function. The optimization apparatus performs calculation by replacing a problem to be calculated with an Ising model, which is a model representing behavior of spins of a magnetic material.

As a calculation method for a minimum value obtaining problem using an Ising model, there is a method for obtaining a minimum value of the Ising type energy function by using Markov Chain Monte Carlo (MCMC). In the MCMC method, it is common to perform state transition, which is update of a state variable of the energy function with a transition probability according to Boltzmann distribution. In the MCMC method, a search is performed by probabilistically inverting any bit of a bit string representing a state, and it is determined whether it is possible to transfer on the basis of an energy difference in a case of transfer from a current state to a neighboring state. Ising type energy is energy of a quadratic system of binary variables.

Among such optimization problems, there is a problem to which a constraint condition referred to as one-hot constraint is imposed. The one-hot constraint is constraint in which the number of state variables a value of which is 1 in one solution is limited to one in a case where there is a plurality of state variables. The optimization problems in which the one-hot constraint appears include many scheduling problems such as a traveling salesman problem (TSP) and a versatile place and route (VPR) problem as well as a knapsack problem and a bin packing problem.

Moreover, there are two types of one-hot constraint. One is the constraint referred to as one-way one-hot (1W1H) constraint. In this case, each variable appears once in a set in constraint expression. The optimization problems with this constraint include a traffic optimization problem and a bin packing problem.

The other is the constraint referred to as two-way one-hot (2W1H) constraint. In this case, when $n^2$ variables are arranged in $n \times n$ square, the sum of each row and the sum of each column are all 1. This constraint is equivalent to the constraint in a case of determining order of n different elements such as integers 1, 2, ..., n, for example. The optimization problems with this constraint include a traveling salesman problem, a versatile place and route problem, and a quadratic assignment problem (QAP).

In a solution to such two-way one-hot problem, by devising formulation, for example, in the versatile place and route problem, the number of target depots could be increased from about 20 to about 100. Furthermore, suggested is a technology of performing optimization processing by using one of two evaluation functions having different penalty coefficients for processing of determining a lowest energy state and using the other for processing of searching for a solution to the optimization problem. Furthermore, suggested is a technology of updating a value of the state variable by using Markov Chain Monte Carlo on the basis of transition probability distribution in which the larger a change in the value of the evaluation function due to change in the value of the state variable in a positive direction, the larger the transition probability than that of the Boltzmann distribution.

Japanese Laid-open Patent Publication No. 2019-121137 and Japanese Laid-open Patent Publication No. 2020-205049 are disclosed as related art.

SUMMARY

TECHNICAL PROBLEM

However, in large-scale or highly difficult problem out of the versatile place and route problems, it is very difficult to escape from a quasi-local solution by a typical solution obtained by devising formulation, and it might be difficult to obtain an optimal solution. The reason for this is that, in the typical solution obtained by devising formulation, narrow neighborhood of a state at that time becomes a search target when the state transition is performed. This is because the state transition according to the two-way one-hot constraint is a simple operation as an operation for permutation. Therefore, a method for escaping from a quasi-optimal state by making a wide neighborhood the search target is considered, but in a case where the number of state variables of which transition is made is increased, the number of next states to be searched increases explosively, which makes calculation difficult.

In this regard, in the technology of performing the optimization processing by using the two evaluation functions having the different penalty coefficients, the probability of escaping from the quasi-local solution is high, but it is difficult to reduce a calculation amount in a case of performing the state transition according to the two-way one-hot constraint with the wide neighborhood as the search target. Furthermore, even with a technology of updating the value of the state variable on the basis of the transition probability distribution in which the transition probability increases according to the value of the evaluation function, it is difficult to reduce the calculation amount in a case of performing the state transition according to the two-way one-hot constraint with the wide neighborhood as the search target.

The disclosed technology is achieved in view of the description above, and an object thereof is to provide an information processing apparatus, an information processing method, and an information processing program that efficiently obtain a solution to a problem according to two-way one-hot constraint.

SOLUTION TO PROBLEM

According to an aspect of the embodiments, there is provided an information processing apparatus including: a search unit that searches for a solution of a problem to which a constraint condition that includes two-way one-hot constraint is given, by using a first matrix based on an objective function as a weight matrix; a transition unit that changes a part of values of the solution that is a search result of the search unit in a case where the search by the search unit reaches a specific state; and a weight matrix switch unit that causes the search unit to perform the search by setting, as the weight matrix, a return matrix generated by using a penalty coefficient in the weight matrix in a case where the part of values of a plurality of variables included in the solution is changed by the transition unit, and causes the search unit to perform the search by returning the weight matrix to the first matrix when the search result made by the search unit reaches a state that satisfies the two-way one-hot constraint.

ADVANTAGEOUS EFFECTS OF INVENTION

In one aspect, this embodiment may efficiently obtain a solution to a problem according to two-way one-hot constraint.

BRIEF DESCRIPTION OF DRAWINGS

FIG. 1 is a diagram for explaining two-way one-hot constraint;
FIG. 2 is a configuration diagram of an optimization unit included in an optimization apparatus according to an embodiment;
FIG. 3 is a diagram illustrating a weight matrix used in the embodiment;
FIG. 4 is a diagram illustrating an example of a data storage state in a storage element;
FIG. 5 is a diagram illustrating an example of a selection circuit;
FIG. 6 is a block diagram illustrating a control unit of an optimization apparatus according to the embodiment in detail;
FIG. 7 is a diagram illustrating an example of a capacitated vehicle routing problem;
FIG. 8 is a diagram illustrating an example of a group variable given to an element of a matrix;
FIG. 9 is a flowchart of optimization processing by the optimization apparatus according to the embodiment;
FIG. 10 is a flowchart of the optimization processing according to the two-way one-hot constraint; and
FIG. 11 is a flowchart of the optimization processing for returning to a state satisfying the two-way one-hot constraint.

DESCRIPTION OF EMBODIMENTS

Hereinafter, an embodiment of an information processing apparatus, an information processing method, and an information processing program disclosed in the present application is described in detail with reference to the drawings. Note that the following embodiment does not limit the information processing apparatus, the information processing method, and the information processing program disclosed in the present application.

[Embodiment]

A case where values of N bits corresponding to a plurality of spins (number of spins = N) included in a two-way one-hot Ising model are represented by state variables $x_1$ to $x_N$ is considered. Hereinafter, a state variable represented by $x_i$ might be represented by a state variable $x_i$ or simply $x_i$.

In this case, one-hot constraint is satisfied when there is only one state variable a value of which is 1 in each group between braces of following expression (1), for example.

[Expression 1]

$$x = \left( \{x_1, \cdots, x_{S_1}\}, \{x_{S_1+1}, \cdots, x_{S_2}\}, \cdots\cdots, \{x_{S_{G-1}+1}, \cdots, x_N\} \right) \quad \cdots (1)$$

For example, in a case where there are three state variables $x_1$, $x_2$, and $x_3$ in a certain group, a state of $\{x_1, x_2, x_3\} = \{1, 0, 0\}$, $\{0, 1, 0\}$, or $\{0, 0, 1\}$ satisfies the one-hot constraint. In contrast, a state of $\{x_1, x_2, x_3\} = \{0, 0, 0\}$, $\{1, 1, 0\}$, $\{1, 0, 1\}$, $\{0, 1, 1\}$, or $\{1, 1, 1\}$ does not satisfy the one-hot constraint.

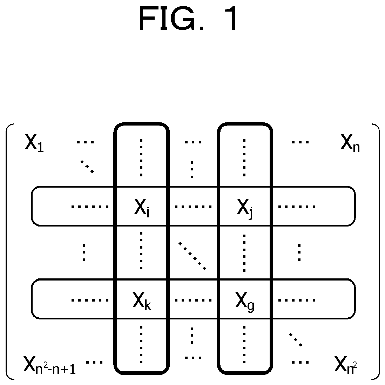

Moreover, in a case of two-way one-hot constraint, the one-hot constraint is satisfied in each of two groups of conditions, for example, there is one state variable the value of which is 1 in each group. In the two-way one-hot constraint, for example, in a case where each of two groups of conditions includes n components, elements each of which collectively represents the components of each group may be arranged into n × n square as illustrated in FIG. 1. In this case, the sum of each row and the sum of each column are all 1. FIG. 1 is a diagram for explaining the two-way one-hot constraint. In FIG. 1, m = 1, 2, ..., N, and N = $n^2$.

In this case, in order to make transition from a certain state satisfying the two-way one-hot constraint to another state satisfying the two-way one-hot constraint, an optimization apparatus changes values of four bits in one state update processing. For example, in a case where a state variable $x_j$ has a value of 0 in FIG. 1, when transition of $x_j$ is made from 0 to 1, transition of a state variable $x_i$ in the same row as that of $x_j$ having a value of 1 is made from 1 to 0. Furthermore, transition of a state variable $x_g$ in the same column as that of $x_j$ having a value of 1 is made from 1 to 0. Moreover, transition of $x_k$ in the same column as that of $x_i$ and in the same row as that of $x_g$ is made from 0 to 1. Hereinafter, the transition of the value of a certain state variable from 0 to 1 or from 1 to 0 is referred to as inversion of the value of the state variable or bit inversion.

In this manner, in order to make transition from the certain state satisfying the two-way one-hot constraint to the another state satisfying the two-way one-hot constraint, transition of four state variables is made as in following expression (2).

[Expression 2]

$$x_i: 1 \to 0, x_j: 0 \to 1, x_k: 0 \to 1, x_g: 1 \to 0 \quad \cdots (2)$$

An Ising type energy function using a weight value in this case is defined by following expression (3), for example.

[Expression 3]

$$E(x) = -\sum_{\langle i,j \rangle} W_{ij} x_i x_j - \sum_i b_i x_i \quad \cdots (3)$$

A first term on a right side is obtained by integrating products of values (0 or 1) of two bits and a weight value for all combinations of two bits selectable from all bits included in the Ising model without omission or duplication. A state variable representing a value of a bit an index (bit identification information) of which is i is represented by $x_i$, and a state variable representing a value of a bit an index of which is j is represented by $x_j$. Hereinafter, there is a case where the index represented by i is referred to as an index i or simply i. Furthermore, $W_{ij}$ represents a weight value indicating magnitude of an interaction between the bit the index of which is i and the bit the index of which is j. Note that $W_{ii} = 0$. Furthermore, $W_{ij} = W_{ji}$ in many cases.

A second term on the right side represents the total sum of products of a bias value and a bit value of each of all the bits. The bias value of the bit with the index i is represented by $b_i$.

Next, in expression (2), when the value of $x_i$ changes to $1-x_i$, an increment of $x_i$ may be expressed by $\Delta x_i = (1 - x_i) - x_i = 1 - 2x_i$. An energy change ($\Delta E_i$) associated with this change in value is expressed by following expression (4).

[Expression 4]

$$\Delta E_i = E(x)|_{x_i \to x_i + \Delta x_i} E(x) = -\delta x_i \left( \sum_j W_{ij} x_j + b_i \right) = -h_i \cdot \Delta x_i \quad \cdots (4)$$

Moreover, in order to make transition from the certain state satisfying the two-way one-hot constraint to the another state satisfying the two-way one-hot constraint as described above, values of four bits are changed. Assuming that i, j, k, and g are changed out of the indices as in expression (2), the energy change in that case is obtained as following expression (5) by using expression (3).
[Expression 5]

$$\Delta E_j = \left( h_i + h_g \right) - \left( h_j + h_k \right) - \left( W_{ig} + W_{jk} \right) \quad \cdots (5)$$

When $x_i$ changes from 1 to 0, $\Delta x_i$ is -1, and when $x_i$ changes from 0 to 1, $\Delta x_i$ is 1. Note that $h_i$ is referred to as a local field value (local field), and $\Delta E_i$ is obtained by multiplying $h_i$ by a sign (+1 or -1) depending on $\Delta x_i$.
Then, a change amount $\delta h_i^{(j)}$ of the local field $h_i$ at the time of bit inversion of $x_j$ is expressed by following expression (6).
[Expression 6]

$$\delta h_i^{(j)} = \begin{cases} +W_{ij} & for\, x_j = 0 \to 1 \\ -W_{ij} & for\, x_j = 1 \to 0 \end{cases} \quad \cdots (6)$$

For example, a correct $h_i$ is obtained by preparing a register that stores $h_i$ and adding a change amount expressed by expression (5) at the time of bit inversion of $x_j$.
A change amount of $h_m$ when $x_j$ changes from 0 to 1 is $\delta h_m^{(j)} = +W_{mj}$, and the change amount of $h_m$ when $x_j$ changes from 1 to 0 is $\delta h_m^{(j)} = -W_{mj}$. Similarly, the change amount of $h_m$ regarding the bit the index of which is m when $x_i$ changes may be expressed by $\delta h_m^{(i)} = \Delta x_m W_{mi}$. Furthermore, the change amount of $h_m$ regarding the bit the index of which is m when $x_k$ changes may be expressed by $\delta h_m^{(k)} = \Delta x_m W_{mk}$. Furthermore, the change amount of $h_m$ regarding the bit the index of which is m when $x_g$ changes may be expressed by $\delta h_m^{(k)} = \Delta x_m W_{mk}$.
As described above, in order to make transition from the certain state satisfying the two-way one-hot constraint to the another state satisfying the two-way one-hot constraint, values of four bits are changed. For example, in a case where the state variable $x_j$ changes from 0 to 1, the state variable $x_i$ changes from 1 to 0, the state variable $x_k$ changes from 0 to 1, and the state variable $x_g$ changes from 1 to 0, a change amount of the local field the index of which is m is expressed by following expression (7).
[Expression 7]

$$\Delta h_m = W_{mj} + W_{mk} - \left( W_{mi} + W_{mg} \right) \quad \cdots (7)$$

By the way, when the optimization apparatus searches for a ground state by repeating processing of changing values of four bits in one state update processing, the local field value is updated for calculating the energy change in each state update processing. For example, in a case where both the values of the bits of the index j and the index k change from 0 to 1 and both the values of the bits of the index i and the index g change from 1 to 0 in a certain group, $h_1$ to $h_n$ regarding n bits are updated on the basis of following expression (8).
[Expression 8]

$$(h_1', h_2', \cdots, h_N') = (h_1, h_2, \cdots, h_N) - \left( W_{i1}, W_{i2}, \cdots, W_{iN} \right)$$
$$-\left( W_{j1}, W_{j2}, \cdots, W_{jN} \right) - \left( W_{k1}, W_{k2}, \cdots, W_{kN} \right) - \left( W_{g1}, W_{g2}, \cdots, W_{gN} \right) \quad \cdots (8)$$

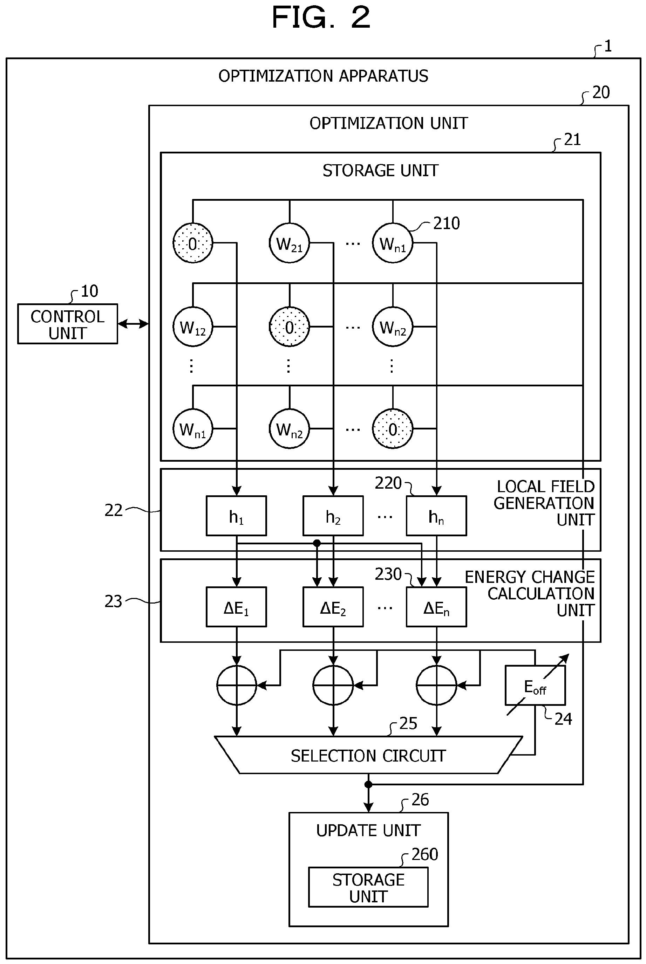

In expression (8), $h_1'$ to $h_n'$ represent local field values after the update.
Next, the optimization apparatus 1 according to this embodiment is described in detail. FIG. 2 is a configuration diagram of an optimization unit included in the optimization apparatus according to the embodiment. The optimization apparatus 1, which is an information processing apparatus, includes a control unit 10 and an optimization unit 20. The optimization unit 20 includes a storage unit 21, a local field generation unit 22, an energy change calculation unit 23, an offset addition unit 24, a selection circuit 25, and an update unit 26. The optimization unit 20 corresponds to an example of a "search unit". Here, a case of solving an optimization problem having two-way one-hot constraint using groups of conditions each including n components is described.

The storage unit 21 includes routes of a plurality of columns, and also storage elements 210 as many as the columns are further arranged in each column. For example, in FIG. 2, the storage unit 21 includes the routes of N columns. Then, the storage unit 21 includes N storage elements 210 in each column. The storage elements 210 arranged in a stage of the same number from the top of the respective columns correspond to a row including N elements. For example, the storage unit 21 holds weight values indicating magnitude of interactions between the respective N bits by the storage elements 210 arranged in an $N \times N$ matrix, respectively. In a weight matrix, which is the matrix of the weight values, an initial value is stored in each of the storage elements 210 of the storage unit 21 by the control unit 10 at the time of initial setting processing. In FIG. 2, the storage element 210 of each row and each column includes a weight value represented by $W_{ij}$ in a case where a row number is i and a column number is j. The storage unit 21 is implemented by using, for example, a register, a static random access memory (SRAM) and the like.

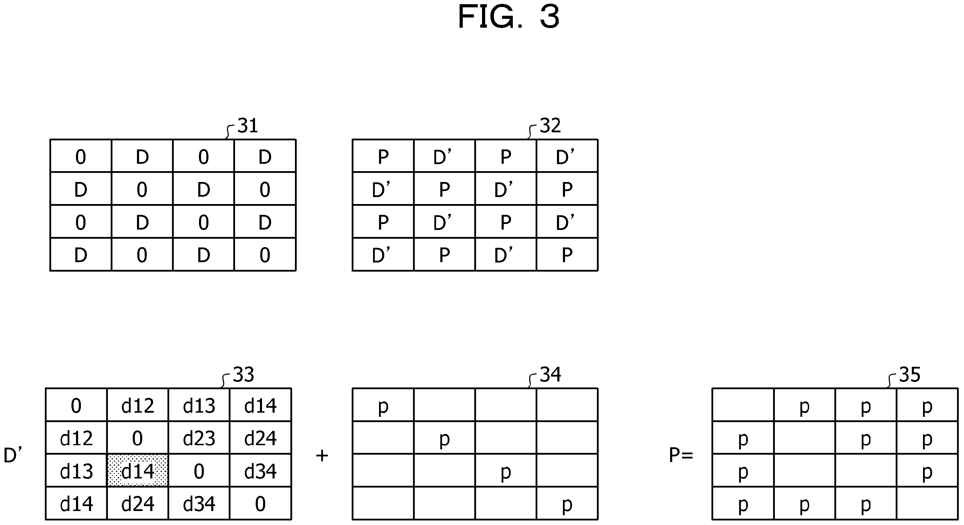

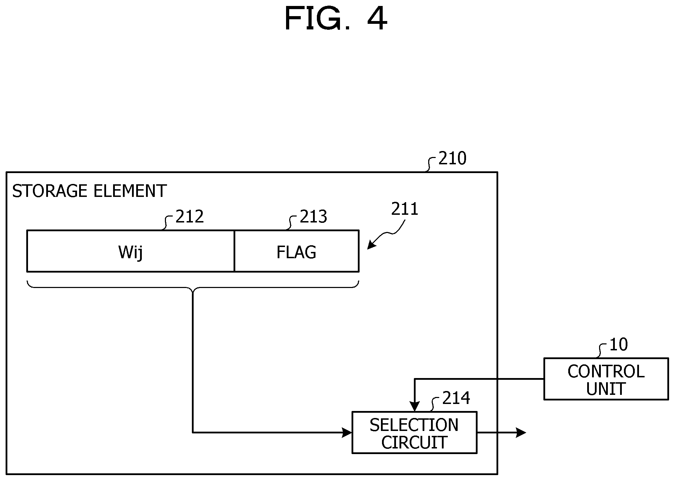

Here, the weight matrix and weight values stored in the storage elements 210 of the storage unit 21 are described. FIG. 3 is a diagram illustrating the weight matrix used in the embodiment. Furthermore, FIG. 4 is a diagram illustrating an example of a data storage state in the storage element.

In this embodiment, as the weight matrix, an optimization matrix 31 for performing optimization processing while the state variables satisfy two-way one-hot constraint, and a return matrix 32 for returning the state variables not satisfying the two-way one-hot constraint to a state satisfying the two-way one-hot constraint are used. The optimization matrix 31 corresponds to an example of a "first matrix". Here, a mode for performing the optimization processing while the state variables satisfy the two-way one-hot constraint using the optimization matrix 31 is referred to as an optimization mode. Furthermore, a mode for returning the state variables not satisfying the two-way one-hot constraint to the state satisfying the two-way one-hot constraint using the return matrix 32 is referred to as a return mode.

The optimization matrix 31 is a matrix obtained by combining a 0 matrix and a distance matrix D as illustrated in FIG. 3. The distance matrix D is a matrix that gives a cost according to a distance between two depots. The distance matrix D is represented by a matrix 33, for example. The matrix 33 corresponds to the distance matrix D in first row and second column of the optimization matrix 31.

Furthermore, the return matrix 32 is, as illustrated in FIG. 3, a matrix obtained by combining a penalty matrix P and a corrected distance matrix D'. The penalty matrix P is a matrix that gives a penalty coefficient p to the state variable that violates one of the conditions in the two-way one-hot constraint, and is represented by a matrix 35. Furthermore, the corrected distance matrix D' is a matrix that gives a penalty to the state variable that violates the other condition in the two-way one-hot constraint, and is obtained by adding a diagonal matrix 34 having the penalty coefficients p as diagonal components to the distance matrix D. For example, a case is described in which the state variables are arranged in a matrix, a time lapse is represented by elements arranged in a row, and the depots are represented by elements arranged in a column. In this case, the penalty matrix P is a matrix that gives a penalty to the state variable that violates a condition that presence at two or more different depots at the same time is not allowed; such as being at a depot B1 at time T1 and moving to a depot B2 at time T1. Furthermore, the corrected distance matrix D' is a matrix that gives a penalty to the state variable that violates a condition that the number of times of visiting one depot is one; such as being at the depot B1 at time T1 and time T2, and gives a weight value to others.

Moreover, the weight value stored in each storage element 210 is described. For example, the storage element 210 stores data 211 illustrated in FIG. 4. The data 211 includes a weight value 212 and a flag 213.

As the weight value 212 located at a place corresponding to the element other than the diagonal component in the distance matrix D, a value indicating a cost corresponding to the distance between the two depots represented by the element is stored. In contrast, 0 and the penalty coefficient p are stored as the weight value 212 located at a place corresponding to the element other than the diagonal component of the distance matrix D and the diagonal component of the penalty matrix P.

Furthermore, as the flag 213, information indicating whether the weight value 212 is the penalty coefficient p or the cost according to the distance between the two depots is stored. Here, in a case where a value of the flag 213 is 0, this indicates that the weight value 212 is the cost, and in a case where the value of the flag 213 is 1, this indicates that the weight value 212 is the penalty coefficient. For example, the flag 213 the value of which is 0 is added to the weight value 212 located at a place corresponding to the element other than the diagonal component of the distance matrix D. In contrast, the flag 213 the value of which is 1 is added to the weight value 212 located at a place corresponding to the element other than the diagonal component of the distance matrix D and the diagonal component of the penalty matrix P.

Moreover, the storage element 210 includes a selection circuit 214. The selection circuit 214 receives an input of the data 211 held by the storage element 210. Furthermore, the selection circuit 214 also receives an input of information indicating whether an operation mode of the optimization apparatus 1 is the optimization mode or the return mode from the control unit 10. Then, the selection circuit 214 confirms the flag 213 of the data 211 and determines whether the weight value 212 is the penalty coefficient p or the cost. In a case where the weight value 212 is the cost, the selection circuit 214 always outputs the value of weight value 212 as is. In contrast, in a case where the weight value 212 is the penalty coefficient p, the selection circuit 214 outputs 0 in a case where the optimization apparatus 1 operates in the optimization mode, and outputs the penalty coefficient in a case where the optimization apparatus 1 operates in the return mode.

Returning to FIG. 1, the storage unit 21 is continuously described. When the state variable the value of which is to be inverted is selected by the selection circuit 25, the value of the weight corresponding to the selected state variable out of the weight values stored in the storage elements 210 of the storage unit 21, respectively, is rewritten to a value after inversion. For example, in a case where $x_j$ is selected as the state variable to be inverted, the index j is input from the selection circuit 25, and the weight value represented by $W_{mj}$ is rewritten.

Here, in a case of operating in the optimization mode under the two-way one-hot constraint, four bits are inverted collectively. Therefore, in a case of the optimization mode, out of the weight values stored in the respective storage elements 210 of the storage unit 21, the weight values held by the storage elements 210 identified by the indices indicating other three bits corresponding to the index specified by the selection circuit 25 are also rewritten. For example, in a case of the matrix illustrated in FIG. 1, the indices indicating the other three bits corresponding to the index j are i, k, and g.

The local field generation unit 22 includes a plurality of local field generation circuits 220 arranged so as to correspond to the columns of the storage elements 210 arranged in the matrix of the storage unit 21, respectively. Each local field generation circuit 220 obtains the weight value included in each storage element 210 arranged in the corresponding column. Then, each local field generation circuit 220 generates the local field value, which is the value of the local field, by using the obtained weight value.

In the example in FIG. 1, the local field generation unit 22 includes the local field generation circuits 220 that generate $h_1$, $h_2$, ..., and $h_N$, which are the local field values regarding the N bits, respectively. Although not illustrated, each of the local field generation circuits 220 includes a hold unit (for example, a register), and holds and updates the local field values $h_1$ to $h_N$ held by each of them.

For example, in a case where the state variable $x_j$ is updated, each of the local field generation circuits 220 updates the local field by adding or subtracting weight value $W_{j1}$, $W_{j2}$, ..., or $W_{jN}$ corresponding to each of them to and from the held local field. For example, the local field generation circuit 220 corresponding to a row i adds the weight value $W_{ji}$ to the local field $h_i$ in a case of the transition of the state variable $x_j$ from 0 to 1, and subtracts the weight value $W_{ji}$ from the local field $h_i$ in a case of the transition of the state variable $x_j$ from 1 to 0. Here, as described above, four bits are inverted in a case of the two-way one-hot, so that the local field generation circuit 220 updates the local field by adding or subtracting expression (7) to or from the local field held by itself.

Initial values of $h_1$ to $h_N$ are, for example, bias values $b_1$ to $b_N$, respectively, and are set by the control unit 10 at the time of initial setting processing. The local field generation circuit 220 is implemented by using, for example, an adder or a subtractor in place of the register.

Moreover, in a case where the operation mode is changed from the optimization mode to the return mode, the local field generation unit 22 causes each local field generation circuit 220 to recalculate the local field value, which is the local field, at the time of change. This is because transition of an appropriate state variable having a value of 1 to 0 is forcibly made by the control unit 10 in a case where the operation mode is changed from the optimization mode to the return mode, so that violation of the two-way one-hot constraint occurs and the local field significantly changes. However, in this case, the local field generation unit 22 does not cause the local field generation circuit 220 to recalculate the local field from the beginning, but causes the same to recalculate by adding twice the penalty coefficient p to the local field of the variable included in the row and column in which the violation of the two-way one-hot constraint occurs.

The energy change calculation unit 23 calculates the energy change on the basis of the local field value generated by the local field generation unit 22. In the example in FIG. 1, the energy change calculation unit 23 includes energy change calculation circuits 230 that calculate $\Delta E_1$, $\Delta E_2$, ..., and $\Delta E_N$, which are energy changes in a case where respective N bits corresponding to the columns of the storage elements 210, of the storage unit 21 change, respectively. In FIG. 2, the route extending from the local field generation circuit 220 holding the local field $h_i$ to each energy change calculation circuit 230 is illustrated as an example, but the route extends from other local field generation circuits 220 to all the energy change calculation circuits 230.

The energy change calculation circuit 230 calculates the energy change amount using expression (5). For example, $\Delta E_j$ represents the energy change amount in a case of the transition of four state variables as in expression (2). Thereafter, each energy change calculation circuit 230 outputs the calculated energy change amount to the selection circuit 25.

The offset addition unit 24 monitors the energy change amount output from each energy change calculation circuit 230. Then, in a case where all the energy change amounts output from the energy change calculation circuits 230 are positive, the offset addition unit 24 adds an offset to each value. The offset is a negative value, and the offset addition unit 24 adjusts so that the energy change amount becomes a negative value, for example, the energy change amount in a case where the energy decrease appears.

The selection circuit 25 receives an input of the energy change amount output from each energy change calculation circuit 230. Here, in a case where all the energy change amounts are positive, the selection circuit 25 receives an input of a value obtained by adding the offset by the offset addition unit 24.

The selection circuit 25 outputs an index for identifying one that allows update of the value on the basis of a magnitude relationship between thermal excitation energy and the energy change amount output by each of a plurality of energy change calculation circuits 230. The thermal excitation energy is determined on the basis of a random number and a temperature parameter input from the control unit 10. In a case where simulated annealing is performed in the optimization apparatus 1, the temperature parameter is controlled by, for example, the control unit 10 so that the value decreases each time processing of updating the state of the Ising model is repeated a predetermined number of times. Furthermore, it is also possible to select the state change in a direction in which the energy decreases, but in this case, it stops at a local minimum value. Therefore, selection is made that stochastically allows a change in which the energy increases.

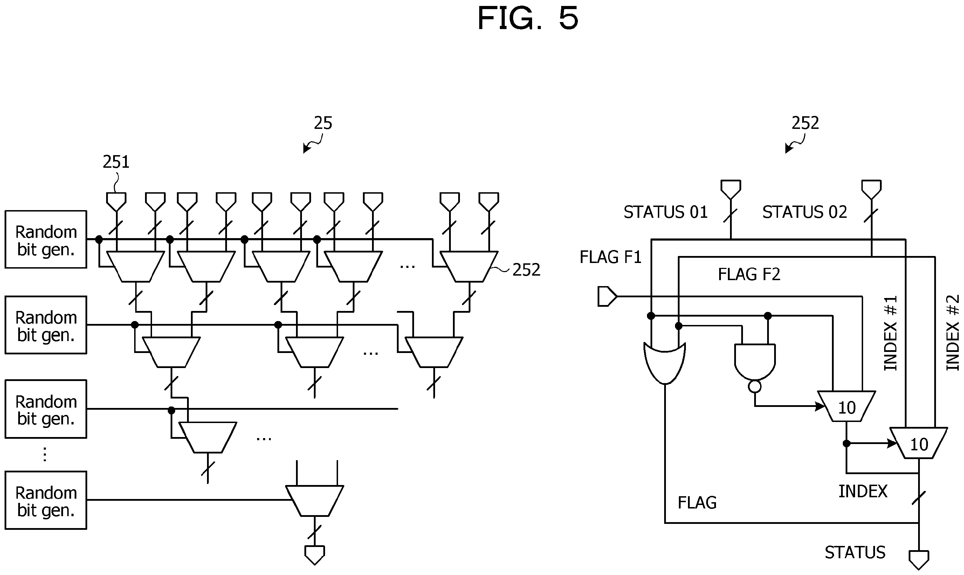

FIG. 5 is a diagram illustrating an example of the selection circuit. The selection circuit 25 in FIG. 5 is a circuit that selects a candidate of the updated bit in parallel orientation. An input terminal 251 is a terminal that receives an input of a value of an index corresponding to the energy change amount output from the energy change calculation circuit 230. Each terminal is connected to a selector 252 two by two. Moreover, an output from the selector 252 is connected to the selector 252 in a next stage two by two.

The selection circuit 25 determines whether the energy change amount input from the energy change calculation circuit 230 may accept the transition of the state variable by comparing the same with the temperature parameter input from the control unit 10. For example, the selection circuit 25 determines that the transition of the state variable is acceptable in a case where the energy change amount is smaller than a predetermined value calculated from the temperature parameter. Then, the selection circuit 25 sets an updatable flag for the index corresponding to the energy change determined to be able to accept the transition of the state variable. Then, the selection circuit 25 inputs the index corresponding to each energy change to each of the input terminals 251, and performs a tournament by the selector 252.

The selector 252 is implemented by, for example, a circuit on a right side of a paper surface in FIG. 5. The selector 252 including this circuit receives an input of two statuses 01 and 02, and obtains flags F1 and F2, and indices #1 and #2 from them, respectively. Then, the selector 252 receives an input of the random number and selects either of the indices #1 or #2 with the updatable flag set. The selector 252 adds an entry number indicating 0 or 1 of the selected one to a higher rank of the index. Then, the selector 252 outputs the selected index to the selector 252 in the next stage. The index selected by the selector 252 in a final stage indicates the bit selected by the selection circuit 25. Information of the index selected by the selection circuit 25 is output to the update unit 26 and transmitted to the storage unit 21. Therefore, the weight values held by the storage element 210 identified by the index and the storage element 210 identified by the index indicating another corresponding bit are updated.

The update unit 26 includes a storage unit 260 that holds the values ($x_1$ to $x_N$) of the N bits each of which represents the state variable. The storage unit 260 is implemented by using, for example, a register, an SRAM and the like. The update unit 26 updates the value of the bit identified by the index input from the selection circuit 25 from 0 to 1. Moreover, the update unit 26 updates the values of other three bits corresponding to the index input from the selection circuit 25. For example, in a case where the index j indicating the state variable $x_j$ illustrated in FIG. 1 is input from the selection circuit 25, the update unit 26 updates the values of the bits identified by the indices i, k, and g. In this case, the update unit 26 updates each value as expressed by expression (2).

The update unit 26 outputs a notification that the update of the state variable is completed to the control unit 10. Moreover, the update unit 26 also outputs the updated value of each state variable to the control unit 10.

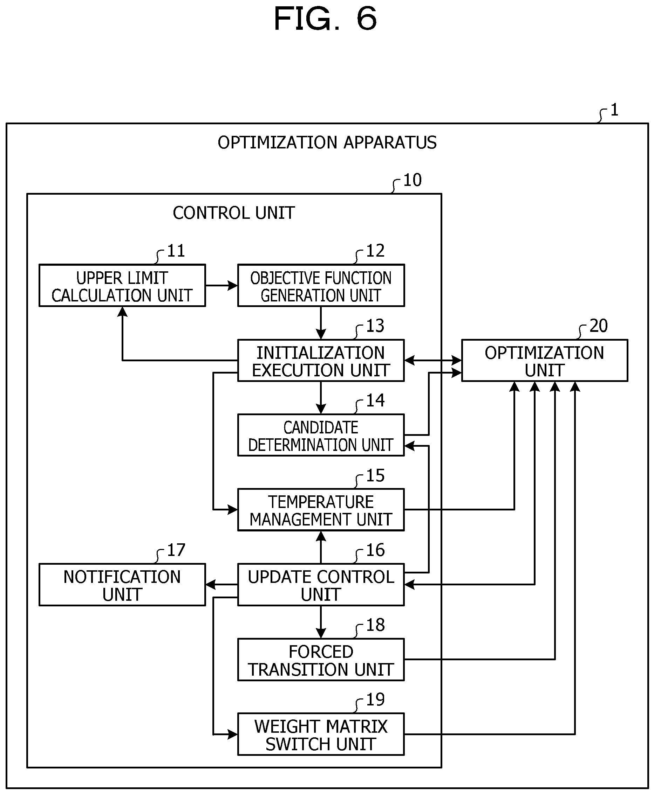

Next, the control unit 10 is described. FIG. 6 is a block diagram illustrating the control unit of the optimization apparatus according to the embodiment in detail. As illustrated in FIG. 6, the control unit 10 includes an upper limit calculation unit 11, an objective function generation unit 12, an initialization execution unit 13, a candidate determination unit 14, a temperature management unit 15, an update control unit 16, a notification unit 17, a forced transition unit 18, and a weight matrix switch unit 19. The control unit 10 is implemented by, for example, a field-programmable gate array (FPGA). For example, by a calculator and a storage unit included in the programmed FPGA, functions of the upper limit calculation unit 11, the objective function generation unit 12, the initialization execution unit 13, the candidate determination unit 14, the temperature management unit 15, the update control unit 16, the notification unit 17, the forced transition unit 18, and the weight matrix switch unit 19 are implemented.

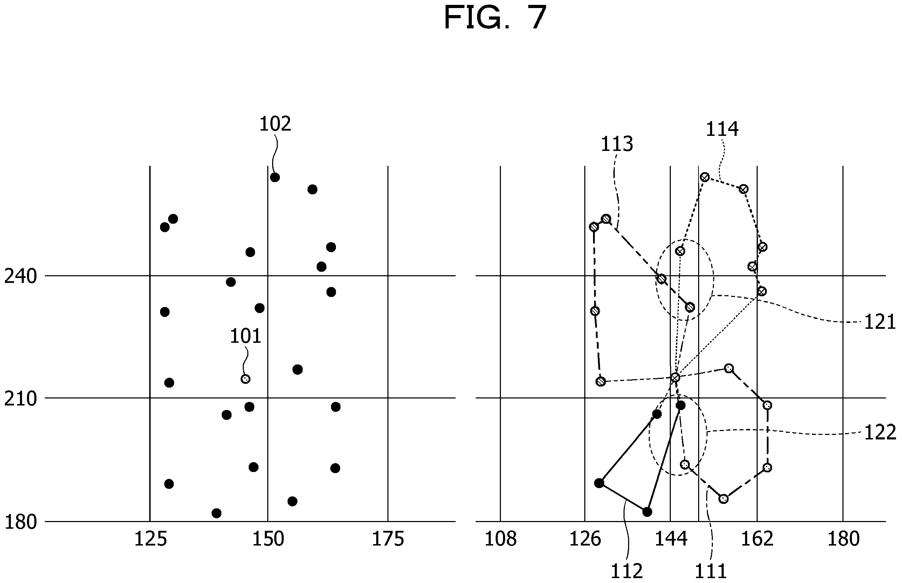

Here, a case where the optimization apparatus 1 solves a capacitated vehicle routing problem (CVRP) is described. FIG. 7 is a diagram illustrating an example of the capacitated vehicle routing problem. In the capacitated vehicle routing problem, as illustrated in FIG. 7, locations of a collection site 101 and depots 102, which are delivery destinations of packages, are determined. Furthermore, a distance between the collection site 101 and each depot 102 and a loading upper limit value of a vehicle are given. Moreover, a demand amount corresponding to an amount of packages to be delivered to each depot 102 is given. Then, a plurality of vehicles starting from the collection site 101 and returning to the collection site 101 carries supplies to each depot 102. A problem of obtaining a route that minimizes the total distance traveled by all the vehicles under the above-described condition is the capacitated vehicle routing problem. FIG. 5 illustrates the capacitated vehicle routing problem in a case where the supplies are transported by four routes using four vehicles.

The initialization execution unit 13 receives an input of conditions of the capacitated vehicle routing problem to be solved. Problem instances, which are the conditions of this capacitated vehicle routing problem, include the number of depots 102 as delivery destinations, the distance between the collection site 101 and each of the depots 102, the number of routes and the like. Each element according to the input conditions is represented by using a matrix representing a component representing a group of conditions indicating in which route it is included, and a component representing a group of conditions indicating at which time point the delivery is performed at this depot. A component representing a group of conditions indicating in which route it is included, and a component representing a group of conditions indicating at which time point the delivery is performed at this depot correspond to an example of "a predetermined number of components included in each of two groups". The initialization execution unit 13 outputs the conditions of the capacitated vehicle routing problem to the upper limit calculation unit 11.

Thereafter, the initialization execution unit 13 receives an input of information of the matrix representing each bit of the state variable satisfying the two-way one-hot constraint and the objective function from the objective function generation unit 12. Then, the initialization execution unit 13 selects the storage element 210 used for the optimization of the storage unit 21 according to the elements of the matrix. Next, the initialization execution unit 13 obtains the weight value corresponding to each state variable from the objective function and sets the weight value corresponding to each storage element 210.

Next, the initialization execution unit 13 sets all the state variables $x_1$ to $x_N$ to 0, and then sets each of the bits representing the state variables $x_1$ to $x_N$, to 0 or 1 so as to satisfy the two-way one-hot constraint. Then, the initialization execution unit 13 outputs the value of each of the bits representing the state variables $x_1$ to $x_N$, to the optimization unit 20. Therefore, the value of each bit in the initial state is stored in the storage unit 260 included in the update unit 26, and each of $h_1$ to $h_N$, which are the local fields, is generated to be held by the local field generation unit 22 according to the state of each bit.

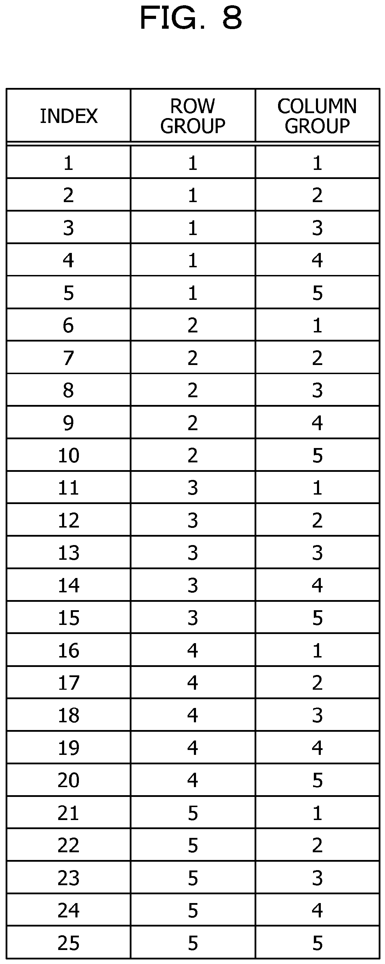

Furthermore, FIG. 8 is a diagram illustrating an example of group variables given to the elements of the matrix. The initialization execution unit 13 assigns a row group number to the elements in the same row in the matrix as the same row group, and assigns a column group number to the elements in the same column as the same column group. Then, the initialization execution unit 13 associates the index indicating each element with the row group number and the column group number.

Then, the initialization execution unit 13 outputs information of the group variable associated with the index indicating each element to the candidate determination unit 14. Moreover, the initialization execution unit 13 notifies the temperature management unit 15 of setting of initial temperature.

The upper limit calculation unit 11 arranges the demand amounts of the depots 102 in ascending order. Next, the upper limit calculation unit 11 calculates a cumulative demand amount including the number of depots from the top to (M-1)-th of the arranged demand amounts when calculating the maximum number of depots of an M-th route. Next, the upper limit calculation unit 11 specifies the minimum number of depots that does not exceed "M × loading upper limit value of vehicle". Then, the upper limit calculation unit 11 sets a quotient obtained by dividing the specified number of depots by M as the maximum number of depots of an N-th route. This is because the demand amounts become a target decreasing sequence by arranging the demand amounts in the ascending order, so that the fact that the M-th route becomes larger than the number obtained by dividing the minimum number of depots not larger than "M × loading upper limit value of vehicle" by M is a contradiction. The upper limit calculation unit 11 changes M from 1 to the upper limit of the number of vehicles to obtain the maximum number of depots of each route from the first to the upper limit of the number of vehicles. Thereafter, the upper limit calculation unit 11 outputs information on the maximum number of depots of each route to the objective function generation unit 12.

The objective function generation unit 12 receives an input of the information on the maximum number of depots of each route from the upper limit calculation unit 11. Next, the objective function generation unit 12 calculates a difference between the total sum of the maximum number of depots of each route and the number of depots 102. Then, the objective function generation unit 12 sets a value of the calculated difference as the number of redundant depots (dummy depots). Next, the objective function generation unit 12 creates a matrix represented by a row in which up to the maximum number of depots for each route are arranged in order and a row in which the depots including the redundant depots are arranged. For example, assuming that a direction in which the row extends is time lapse, this matrix represents the depot out of expanded depots obtained by adding the redundant depots to actual depots 102 where the vehicle visits, and a time point at which the vehicle visits the depot. Each row is a group of conditions indicating in which route the depot is included, and each column is a group of conditions indicating at which time point the delivery is performed to the depot.

Then, the objective function generation unit 12 assigns numbers to the depots 102 as i = 0, 1, 2, ..., sets $x_{it}$ to 1 if there is the vehicle at the depot 102 of the index i at time t, sets $x_{it}$ to 0 if there is no vehicle, and sets the bit that represents the state variable.

In this matrix, rows from a first row to a row of the maximum number of depots in a first route represent the position of the vehicle traveling in the first route, and rows from a next row to a row of the maximum number of depots in a second route represent the position of the vehicle traveling in the second route. In this manner, a number of route is incremented in order, and rows from a last row to a row corresponding to the maximum number of depots in an N-th route of the matrix represent the position of the vehicle traveling in the N-th route. This matrix has the same number of rows and columns, and satisfies the two-way one-hot constraint that "the number of 1 in each row and each column is one".

Then, the objective function generation unit 12 defines the objective function by following expression (9).

[Expression 9]

$$E(x, y) = C(x) + P_1(x) + P_2(x, y) \quad \cdots (9)$$

E(x,y) represents energy. Then, C(x) represents the total sum of costs. Furthermore, $P_1(x)$ represents the constraint of the redundant depot. Furthermore, $P_2(x,y)$ represents inequality constraint of a slack variable y.

The objective function generation unit 12 outputs information of the generated matrix and energy function to the initialization execution unit 13.

The temperature management unit 15 receives an instruction of initial temperature setting from the initialization execution unit 13. Then, the temperature management unit 15 sets the initial temperature, which is high temperature, as a temperature parameter. Then, the temperature management unit 15 notifies the optimization unit 20 of the temperature parameter. Thereafter, when the temperature management unit 15 receives an instruction to lower the temperature from the update control unit 16, this decreases a value of the temperature parameter according to a temperature schedule specified in advance. The temperature management unit 15 notifies the optimization unit 20 of a changed temperature parameter each time the temperature parameter is changed.

The candidate determination unit 14 receives an input of the information of the group variable representing each index from the initialization execution unit 13. Furthermore, the candidate determination unit 14 receives an input of the operation mode of the optimization apparatus 1 from the update control unit 16. Then, the candidate determination unit 14 determines the index indicating the state variable to be inverted as a candidate of the transition according to the operation mode, and notifies the optimization unit 20 of the same. A method for selecting the state variable to be inverted, which is the candidate of the transition, is described below.

A case where the operation mode is the optimization mode is described. The candidate determination unit 14 selects the index indicating the state variable the value of which is to be inverted using the information of the group variable. For example, the candidate determination unit 14 selects the index j indicating the state variable $x_j$ in the matrix illustrated in FIG. 1. Then, the candidate determination unit 14 specifies the indices indicating other three bits determined from the two-way one-hot constraint according to the selected index. For example, in a case where the candidate determination unit 14 first selects the index j indicating the state variable $x_j$ in the matrix illustrated in FIG. 1, this selects i, k, and g as the other three indices. Next, the candidate determination unit 14 determines the state variable corresponding to the selected index as the candidate the value of which is to be inverted. Then, the candidate determination unit 14 notifies the optimization unit 20 of the index determined as the candidate the value of the state variable of which is to be inverted.

By selecting the index j to be inverted one by one from 1 to N, the candidate determination unit 14 determines whether the state variable indicated by each index is made the candidate of bit inversion for all indices, and notifies the optimization unit 20 of this.

Next, a case where the operation mode is the return mode is described. In this case, the two-way one-hot constraint is not imposed, so that the candidate determination unit 14 sequentially selects the indices indicating the state variable the value of which is to be inverted from 1 to N using the information of the group variable. Then, the candidate determination unit 14 notifies the optimization unit 20 of the index determined as the candidate the value of the state variable of which is to be inverted for each selection.

Thereafter, when receiving an instruction to select the next state variable x from the update control unit 16, the candidate determination unit 14 selects again the indices from 1 to N in order according to the operation mode, and notifies the optimization unit 20 of whether the respective state variables are made the candidates of the bit inversion.

The update control unit 16 receives a notification from the optimization unit 20 that the update of the state variable is completed. At that time, the update control unit 16 also receives an input of a value of each state variable from the optimization unit 20. Then, the update control unit 16 sequentially accumulates information on the updated values of the state variables, and determines whether it falls into a local solution using most recent information.

In a case where it falls into the local solution, the update control unit 16 instructs the forced transition unit 18 to execute forced transition processing in order to escape from the local solution. Moreover, the update control unit 16 notifies the candidate determination unit 14, the weight matrix switch unit 19, and the optimization unit 20 of the change of the operation mode from the optimization mode to the return mode.

After the transition to the return mode, the update control unit 16 also obtains the value of each state variable from the optimization unit 20 when receiving the notification that the update of the state variables is completed from the optimization unit 20. Then, the update control unit 16 determines whether it is in a state in which the value of the state variable satisfies the two-way one-hot constraint. In a state in which the two-way one-hot constraint is not satisfied, the update control unit 16 continues the operation in the return mode, and repeats the state transition to recover to the state satisfying the two-way one-hot constraint. In contrast, in a case of the state satisfying the two-way one-hot constraint, the update control unit 16 determines to recover to the optimization mode. Then, the update control unit 16 notifies the candidate determination unit 14, the weight matrix switch unit 19, and the optimization unit 20 of the change from the optimization mode to the return mode.

In contrast, when it does not fall into the local solution, the update control unit 16 determines whether the state variable is selected a specified number of times with the same temperature setting. In a case where the state variable is not selected the specified number of times with the same temperature setting, the update control unit 16 instructs the candidate determination unit 14 to select the next state variable x.

In contrast, in a case where the selection of the state variable of the specified number of times with the same temperature setting is completed, the update control unit 16 determines whether the temperature is lowered a predetermined number of times. In a case where the number of times the temperature is lowered does not reach the predetermined number of times, the update control unit 16 instructs the temperature management unit 15 to lower the temperature and instructs the candidate determination unit 14 to select the next state variable x.

In contrast, in a case where the number of times the temperature is lowered reaches the predetermined number of times, the update control unit 16 determines finishing optimization processing. Then, the update control unit 16 obtains the values of $N = n^2$ bits representing the respective state variables ($x_1$ to $x_N$) stored in the storage unit 260 included in the update unit 26 of the optimization unit 20. Then, the update control unit 16 deletes the bit value of the state variable representing the redundant depot from the values of $N = n^2$ bits representing the respective obtained state variables ($x_1$ to $x_N$). Then, the update control unit 16 outputs information indicating an optimized route to travel the actual depots 102 to the notification unit 17.

Here, in this embodiment, the update control unit 16 determines to execute the forced transition processing in a case of falling into the local solution, but an opportunity to execute the forced transition processing is not limited to this. For example, the update control unit 16 may determine to execute the forced transition processing when a predetermined number of iterations are finished, such as once in 100 times or once in 10,000 times. Furthermore, the update control unit 16 may determine to execute the forced transition processing when the selection circuit 25 rejects all the transitions of $x_1$ to $x_N$. Alternatively, the update control unit 16 may determine to execute the forced transition processing in a case where a state in which the change in energy is small continues a predetermined number of times.

The notification unit 17 receives an input of information indicating the optimized route to travel the actual depots 102 from the update control unit 16. Then, the notification unit 17 obtains an optimum route from the obtained information indicating the optimized route to travel the actual depots 102, and notify a user of the obtained optimum route by transmitting the same to a terminal apparatus (not illustrated) and the like used by the user.

The forced transition unit 18 receives from the update control unit 16 an instruction to execute the forced transition processing for escaping from the local solution in a case of falling into the local solution. Here, a case of falling into the local solution corresponds to an example of "a case where a search reaches a specific state". Then, the forced transition unit 18 selects a row group and a column group, transition of values of which are forcibly made according to a predetermined algorithm. For example, the forced transition unit 18 selects a row group and a column group including information indicating travel to depots in locations where different routes are close to each other or overlap with each other in the route to travel each depot. In a case of FIG. 7, the forced transition unit 18 defines regions 121 and 122 as places where the different routes are close to each other or overlap with each other, and selects the row group and column group including the information indicating the travel to depots in the regions 121 and 122.

Thereafter, the forced transition unit 18 forcibly makes transition of the value of the state variable the value of which is 1 out of the state variables included in the selected row group and column group to 0. Therefore, the transition of the state variable is made to a state significantly changed from a current state, and the state variable is put into a state violating the two-way one-hot constraint.

Here, although the forced transition unit 18 according to this embodiment selects the row group and column group in which the transition of the value of the state variable is forcibly made using a predetermined algorithm, a selection method is not limited to this. For example, the forced transition unit 18 may randomly select the row group and column group subjected to forced transition. Moreover, the forced transition unit 18 may receive specification of the row group and column group subjected to forced transition from an administrator terminal and the like not illustrated. Furthermore, there may be a case where it is desirable to determine the row group and column group subjected to forced transition according to a stage of optimization. In this case, the forced transition unit 18 may obtain the state variable at that time from the update unit 26 of the optimization unit 20 and output the same to an external apparatus, causes the external apparatus to analyze and calculate to obtain a bit to be appropriately changed, and select on the basis of a calculation result. The forced transition unit 18 corresponds to an example of a "transition unit".

The weight matrix switch unit 19 receives notification from the update control unit 16 that the operation mode is changed from the optimization mode to the return mode. Then, the weight matrix switch unit 19 transmits a signal indicating that the operation of the optimization apparatus 1 is in the return mode to the storage unit 21 and the local field generation unit 22 of the optimization unit 20. Therefore, the penalty coefficient p is output from the storage element 210 that holds the penalty coefficient p out of the storage elements 210 of the storage unit 21. For example, the return matrix 32 in FIG. 3 is used for the calculation of the local field. Furthermore, each local field generation circuit 220 of the local field generation unit 22 recalculates the local field value indicating the local field.

Thereafter, when the state variable reaches the state satisfying the two-way one-hot constraint, the weight matrix switch unit 19 receives notification from the update control unit 16 that the operation mode is changed from the return mode to the optimization mode. Then, the weight matrix switch unit 19 transmits a signal indicating that the operation of the optimization apparatus 1 is in the optimization mode to the storage unit 21 of the optimization unit 20. Therefore, the storage element 210 that holds the penalty coefficient p out of the storage elements 210 of the storage unit 21 returns to the state of outputting 0. For example, it returns to the state in which the optimization matrix 31 is used for the calculation of the local field.

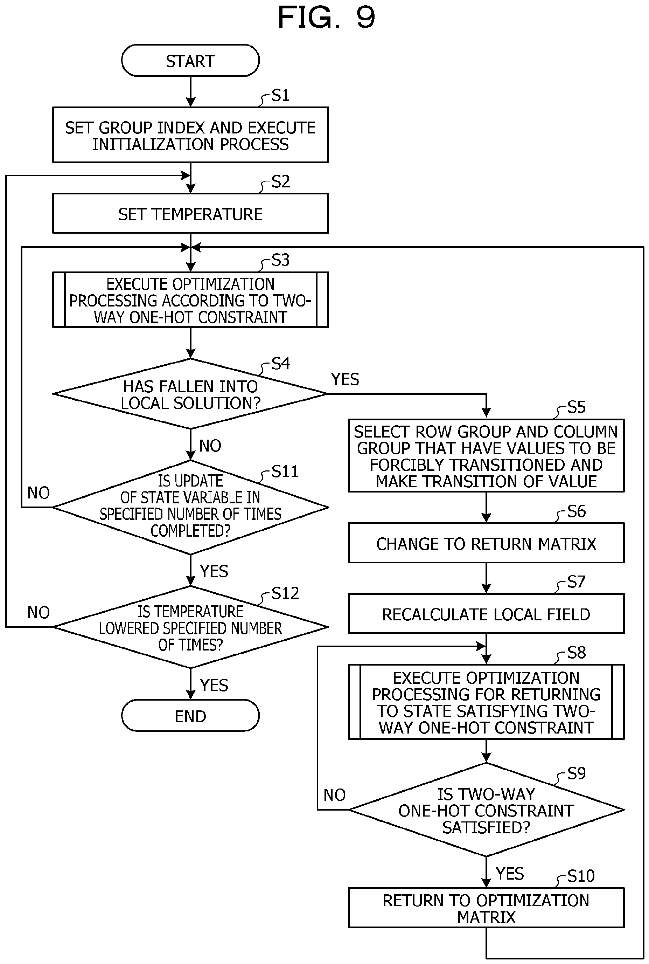

FIG. 9 is a flowchart of the optimization processing by the optimization apparatus according to the embodiment. Next, a flow of the optimization processing by the optimization apparatus 1 according to the embodiment is described with reference to FIG. 7. This optimization processing is implemented by an information processing program executed in the optimization apparatus 1.

The initialization execution unit 13 receives an input of conditions of the capacitated vehicle routing problem. Then, the initialization execution unit 13 outputs the obtained conditions of the capacitated vehicle routing problem to the upper limit calculation unit 11. The upper limit calculation unit 11 arranges the depots 102 as the delivery destinations in ascending order of demand amount. Next, the upper limit calculation unit 11 sequentially selects the depots 102 arranged in ascending order of demand amount from the top, and calculates the maximum number of depots in each route by using the cumulative demand amount up to the selected depots 102 and the loading upper limit value of the vehicle. The objective function generation unit 12 sets the redundant depot using the maximum number of depots, and generates a matrix representing the route in which the expanded depots including the redundant depots and the actual depots 102 are included and the delivery order. Then, the objective function generation unit 12 gives bits representing the respective elements of the generated matrix, and generates the objective function using these bits. The initialization execution unit 13 obtains the matrix and the objective function generated by the objective function generation unit 12. Next, the initialization execution unit 13 executes group index setting and initialization process described below (step S1).

For example, the initialization execution unit 13 gives each element of each row of the obtained matrix the row group number indicating each row, and gives each element of each column the column group number indicating each column. Then, the initialization execution unit 13 associates the index indicating each element with the row group number and the column group number. Moreover, the initialization execution unit 13 sets information indicating whether each index belongs to the redundant variable group depending on whether each index indicates delivery to the redundant depot.

Furthermore, the initialization execution unit 13 secures the storage element 210 included in the storage unit 21 of the optimization unit 20 according to each element of the matrix, and stores the weight value for each bit obtained from the objective function therein. Moreover, the initialization execution unit 13 sets the initial value of each bit so as to satisfy two-way one-hot, and notifies the optimization unit 20 of the same. Therefore, in the optimization unit 20, the local field generation unit 22 calculates to hold $h_1$ to $h_N$, which are the local fields, and stores the initial value of each bit in the storage unit 260 included in the update unit 26.

The temperature management unit 15 receives an instruction of temperature setting from the initialization execution unit 13. Then, in a case where the temperature management unit 15 does not set temperature yet, this notifies the optimization unit 20 of the initial temperature, which is high temperature, and sets the initial temperature. Furthermore, in a case where the temperature is already set, the temperature management unit 15 lowers the temperature from the set temperature already set at that time according to a temperature schedule specified in advance. Then, the temperature management unit 15 notifies the optimization unit 20 of new lowered set temperature, and sets the temperature (step S2).

The control unit 10 and the optimization unit 20 execute the optimization processing according to the two-way one-hot constraint (step S3).

Thereafter, when the update of the state variables and the local fields in the optimization unit 20 is completed, the update control unit 16 of the control unit 10 determines whether it has fallen into the local solution on the basis of the updated value of each state variable (step S4).

In a case of having fallen into the local solution (step S4: Yes), the update control unit 16 instructs the forced transition unit 18 to execute the forced transition processing for escaping from the local solution. The forced transition unit 18 selects a row group and a column group, transition of values of which are forcibly made according to a determined algorithm. Then, the forced transition unit 18 makes transition of the value of the state variable having the value of 1 in the selected row group and column group to 0 (step S5).

Furthermore, the update control unit 16 notifies the storage unit 21 and the local field generation unit 22 of the change of the operation mode to the return mode. Then, a signal indicating the return mode is input to the selection circuit 214 included in the storage element 210 of the storage unit 21. The selection circuit 214 determines whether the input weight value is the penalty coefficient p using the flag 213, and in a case where the weight value is the penalty coefficient p, outputs the weight value indicating the input penalty coefficient p. At that time, in a case where the weight value is the cost also, the selection circuit 214 outputs the weight value indicating the cost. Therefore, the storage unit 21 changes the weight matrix to be used to the return matrix 32 (step S6).

The local field generation unit 22 receives notification of the change of the operation mode to the return mode from the update control unit 16, and causes each local field generation circuit 220 to recalculate the local field after the transition of the values of some state variables are forcibly made from 1 to 0 (step S7).

Then, the control unit 10 and the optimization unit 20 execute the optimization processing for returning to the state satisfying the two-way one-hot constraint (step S8).

Thereafter, when the update of the state variables and the local fields in the optimization unit 20 is completed, the update control unit 16 of the control unit 10 determines whether it returns to the state satisfying the two-way one-hot constraint on the basis of the updated value of each state variable (step S9).

In a case where the state variable does not return to the state satisfying the two-way one-hot constraint (step S9: No), the optimization processing repeats step S8.

In contrast, in a case where the state variable returns to the state satisfying the two-way one-hot constraint (step S9: Yes), the update control unit 16 notifies the storage unit 21 of recovery of the operation mode to the optimization mode. Then, a signal indicating the optimization mode is input to the selection circuit 214 included in the storage element 210 of the storage unit 21. The selection circuit 214 determines whether the input weight value is the penalty coefficient p using the flag 213, and in a case where the weight value is the penalty coefficient p, outputs 0 as the weight value. At that time, when the weight value is the cost, the selection circuit 214 outputs the weight value indicating the cost. Therefore, the storage unit 21 returns the weight matrix to be used to the optimization matrix 31 (step S10). Thereafter, the optimization processing returns to step S3.

In contrast, in a case of not having fallen into the local solution (step S4: No), the update control unit 16 determines whether the update of the state variables in a specified number of times is completed (step S11). In a case where the state variables are not updated the specified number of times (step S11: No), the optimization processing returns to step S3.

In contrast, in a case where the update of the state variables in the specified number of times is completed (step S11: Yes), the update control unit 16 determines whether the temperature is lowered a specified number of times (step S12).

In a case where the temperature is not lowered the specified number of times (step S12: No), the optimization processing returns to step S2. In contrast, in a case where the temperature is lowered the specified number of times (step S12: Yes), the optimization apparatus 1 finishes the optimization processing.

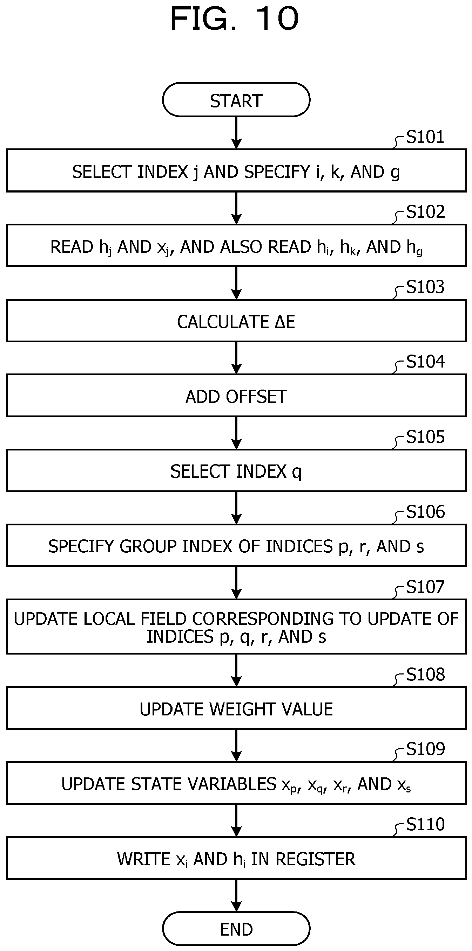

FIG. 10 is a flowchart of the optimization processing according to the two-way one-hot constraint. Next, with reference to FIG. 10, a flow of the optimization processing according to the two-way one-hot constraint is described. Each processing illustrated in FIG. 10 corresponds to an example of the processing executed at step S3 in FIG. 9.

The candidate determination unit 14 obtains information of the group variable associated with the index indicating each state variable from the initialization execution unit 13. Next, the candidate determination unit 14 selects the index j corresponding to $x_j$ out of the elements of the matrix illustrated in FIG. 1 as the index indicating the state variable to be inverted. Next, the candidate determination unit 14 specifies the indices i, k, and g corresponding to the state variables $x_i$, $x_k$, and $x_g$ of the matrix illustrated in FIG. 1 as the indices indicating other three bits determined from the two-way one-hot constraint according to the selected index j (step S101). The candidate determination unit 14 sequentially selects the indices from 1 to N as the index j.

The candidate determination unit 14 notifies the optimization unit 20 of the indices i, j, k, and g. The optimization unit 20 reads the value of $x_j$ held in the storage unit 260 included in the update unit 26. Then, the optimization unit 20 notifies the energy change calculation unit 23 of whether the transition of the value of $x_j$ is from 0 to 1 or 1 to 0. The energy change calculation unit 23 reads $h_j$, which is the local field corresponding to j, further specifies i, k, and g corresponding to j, and reads $h_i$, hk, and $h_g$ from the local field generation circuits 220 holding $h_i$, $h_k$, and $h_g$, respectively (step S102).

Next, the energy change calculation unit 23 calculates $\Delta E(\Delta E_1, \Delta E_2, ..., \Delta E_N)$, which is the energy change amount for each j (step S103). Thereafter, the energy change calculation unit 23 outputs information of the calculated energy change amount.

In a case where all the energy change amounts output from the energy change calculation unit 23 are positive, the offset addition unit 24 adds an offset to each energy change amount (step S104).

The selection circuit 25 obtains the information of each energy change amount output from the energy change calculation unit 23. Then, the selection circuit 25 sets an updatable flag for the index indicating the state variable that may accept the inversion of the value by comparing with the set temperature obtained from the temperature management unit 15 of the control unit 10. Thereafter, the selection circuit 25 selects one index q from the indices to which the updatable flag is added (step S105).

The optimization unit 20 obtains the information of the group variable assigned to each index from the control unit 10. Then, the optimization unit 20 specifies the indices p, r, and s indicating state variables $x_p$, $x_r$, and $x_s$ the values of which are inverted, satisfying the two-way one-hot constraint corresponding to the inversion of the value of the state variable $x_q$ indicated by the index q selected by the selection circuit 25. Then, the optimization unit 20 specifies the group variables representing the indices p, r, and s (step S106).

Information of p, q, r, and s, which are the indices indicating the state variables the values of which are to be updated, is input to the storage unit 21, and the weight values corresponding to the indices are output to the local field generation circuits 220 of the local field generation unit 22, respectively. Each local field generation circuit 220 receives an input of the weight values corresponding to update of p, q, r, or s, and updates the held local field (step S107).

Moreover, the storage unit 21 updates the weight values stored in the storage elements 210 corresponding to the indices p, q, r, and s, respectively (step S108).

The update unit 26 to which information of p, q, r, and s, which are the indices indicating the state variables the values of which are to be updated, is input specifies $x_p$, $x_q$, $x_r$, and $x_s$, which are the state variables indicated by the indices obtained from the state variables held by the storage unit 260. Then, the update unit 26 inverts and updates the values of the specified state variables $x_p$, $x_q$, $x_r$, and $x_s$ (step S109).

Thereafter, the update unit 26 writes all the updated state variables to the storage unit 260. Furthermore, each local field generation circuit 220 writes the updated local field in the register held by the same (step S110).

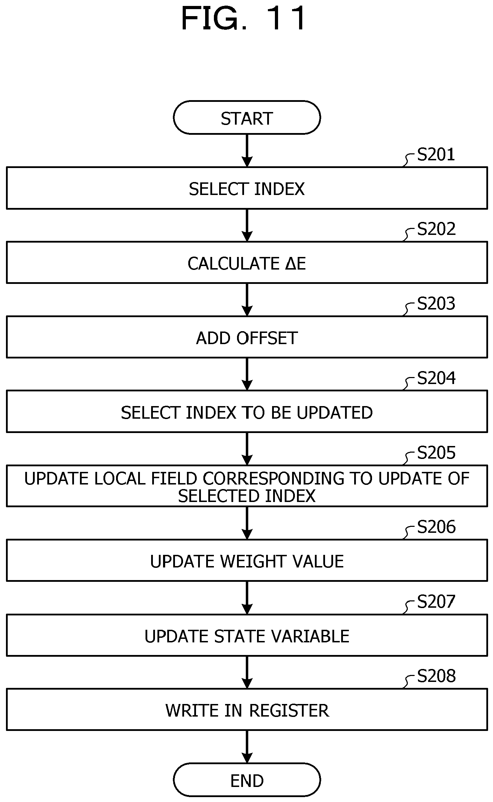

FIG. 11 is a flowchart of the optimization processing for returning to the state satisfying the two-way one-hot constraint. Next, with reference to FIG. 11, a flow of the optimization processing for returning to the state satisfying the two-way one-hot constraint is described. Each processing illustrated in FIG. 11 corresponds to an example of the processing executed at step S8 in FIG. 9.

The candidate determination unit 14 obtains information of the group variable associated with the index indicating each state variable from the initialization execution unit 13. Next, the candidate determination unit 14 selects the index j corresponding to $x_j$ out of the elements of the matrix illustrated in FIG. 1 as the index indicating the state variable to be inverted (step S201). The candidate determination unit 14 sequentially selects from the index 1 to the index N as the index j.

The candidate determination unit 14 notifies the optimization unit 20 of the index j. The optimization unit 20 reads the value of $x_j$ held in the storage unit 260 included in the update unit 26. Then, the optimization unit 20 notifies the energy change calculation unit 23 of whether the transition of the value of $x_j$ is from 0 to 1 or 1 to 0. The energy change calculation unit 23 reads $h_j$, which is the local field corresponding to j. Next, the energy change calculation unit 23 calculates $\Delta E(\Delta E_1, \Delta E_2, ..., \Delta E_N)$, which is the energy change amount for each j (step S202). Thereafter, the energy change calculation unit 23 outputs information of the calculated energy change amount.

In a case where all the energy change amounts output from the energy change calculation unit 23 are positive, the offset addition unit 24 adds an offset to each energy change amount (step S203).

The selection circuit 25 obtains the information of each energy change amount output from the energy change calculation unit 23. Then, the selection circuit 25 sets an updatable flag for the index indicating the state variable that may accept the inversion of the value by comparing with the set temperature obtained from the temperature management unit 15 of the control unit 10. Thereafter, the selection circuit 25 selects one index q from the indices to which the updatable flag is added as the index to be updated (step S204).

Information of the index q indicating the state variable the value of which is to be updated is input to the storage unit 21, and the weight value corresponding to the index is output to each local field generation circuit 220 of the local field generation unit 22. Each local field generation circuit 220 receives an input of the weight value corresponding to update of the index q, and updates the held local field (step S205).

Moreover, the storage unit 21 updates the weight value stored in the storage element 210 corresponding to the index q (step S206).

The update unit 26 to which information of the index q indicating the state variable the value of which is to be updated is input specifies $x_q$, which is the state variable indicated by the index obtained from the state variables held by the storage unit 260. Then, the update unit 26 inverts and updates the value of the specified state variable $x_q$ (step S207).

Thereafter, the update unit 26 writes all the updated state variables to the storage unit 260. Furthermore, each local field generation circuit 220 writes the updated local field in the register held by the same (step S208).

As described above, the optimization apparatus according to this embodiment forcibly makes transition of the values of some state variables from 1 to 0 in a case of reaching a predetermined state such as falling into the local solution when solving the optimization problem having the two-way one-hot constraint. Then, the weight matrix is switched to the matrix using the penalty coefficient, the optimization processing is performed, and it is returned to the state satisfying the two-way one-hot constraint. Therefore, in a case of falling into a quasi-optimal solution, it is possible to easily escape therefrom and easily obtain the optimal solution.

**Claims**

1. An information processing apparatus comprising:

   a search unit that searches for a solution of a problem to which a constraint condition that includes two-way one-hot constraint is given, by using a first matrix based on an objective function as a weight matrix;
   a transition unit that changes a part of values of the solution that is a search result of the search unit in a case where the search by the search unit reaches a specific state; and
   a weight matrix switch unit that causes the search unit to perform the search by setting, as the weight matrix, a return matrix generated by using a penalty coefficient in the weight matrix in a case where the part of values of a plurality of variables included in the solution is changed by the transition unit, and causes the search unit to perform the search by returning the weight matrix to the first matrix when the search result made by the search unit reaches a state that satisfies the two-way one-hot constraint.

2. The information processing apparatus according to claim 1, wherein

   the search unit satisfies the two-way one-hot constraint by assigning a predetermined number of state variables to a predetermined number of components included in each of two groups without duplication allowed, and
   the transition unit cancels a part of assignments of the state variables to the components by changing a part of values of the solution.

3. The information processing apparatus according to claim 1 or 2, wherein the transition unit makes transition of a part of the solution to another value in a case where the search by the search unit falls into a local solution.

4. The information processing apparatus according to any one of claims 1 to 3, further comprising a candidate determination unit that, in a case where the search unit is caused to perform the search by using the first matrix, causes the search unit to perform the search by selecting variables to be changed four by four out of variables of the objective function so as to satisfy the two-way one-hot constraint, and that, in a case where the search unit is caused to perform the search by using the return matrix, causes the search unit to perform the search by selecting a variable to be changed one by one out of the variables of the objective function.

5. The information processing apparatus according to any one of claims 1 to 4, wherein the search unit recalculates a local field in a case where a part of values of the solution is changed by the transition unit.

6. The information processing apparatus according to claim 1, wherein

   in the first matrix, a value used in the objective function is given to a plurality of first elements, and 0 is given to a second element other than the first elements,
   in the return matrix, the same value as the value of the first matrix is given to the first elements, and a value of the penalty coefficient is given to the second element,
   the search unit includes a storage element that holds each element of the return matrix, reads the value of the penalty coefficient from the storage element in which the value of the second element is stored in a case of using the return matrix, and reads 0 from the storage element in which the value of the second element is stored in a case of using the first matrix.

7. An information processing method implemented by a computer, the information processing method comprising:

   initializing a search unit that searches, the search unit being circuitry for a solution of a problem to which a constraint condition that includes two-way one-hot constraint is given, by using a first matrix based on an objective function as a weight matrix;
   executing a transition processing that includes changing a part of values of the solution that is a search result of the search unit in a case where the search by the search unit reaches a specific state; and
   executing a weight matrix switch processing that includes

in a case where the part of values of a plurality of variables included in the solution is changed by the transition processing, causing the search unit to perform the search by setting, as the weight matrix, a return matrix generated by using a penalty coefficient in the weight matrix, and

in a case where the search result made by the search unit reaches a state that satisfies the two-way one-hot constraint, causing the search unit to perform the search by returning the weight matrix to the first matrix.

8. An information processing program comprising instructions which, when executed by a computer, cause a computer to perform processing, the processing comprising:

initializing a search unit that searches, the search unit being circuitry for a solution of a problem to which a constraint condition that includes two-way one-hot constraint is given, by using a first matrix based on an objective function as a weight matrix;

executing a transition processing that includes changing a part of values of the solution that is a search result of the search unit in a case where the search by the search unit reaches a specific state; and

executing a weight matrix switch processing that includes

in a case where the part of values of a plurality of variables included in the solution is changed by the transition processing, causing the search unit to perform the search by setting, as the weight matrix, a return matrix generated by using a penalty coefficient in the weight matrix, and

in a case where the search result made by the search unit reaches a state that satisfies the two-way one-hot constraint, causing the search unit to perform the search by returning the weight matrix to the first matrix.

# FIG. 1

# FIG. 2

# FIG. 3

31

| 0 | D | 0 | D |
|---|---|---|---|
| D | 0 | D | 0 |
| 0 | D | 0 | D |
| D | 0 | D | 0 |

32

| P | D' | P | D' |
|---|----|---|----|
| D' | P | D' | P |
| P | D' | P | D' |
| D' | P | D' | P |

33

D'

| 0 | d12 | d13 | d14 |
|---|-----|-----|-----|
| d12 | 0 | d23 | d24 |
| d13 | d14 | 0 | d34 |
| d14 | d24 | d34 | 0 |

+

34

| p |   |   |   |
|---|---|---|---|
|   | p |   |   |
|   |   | p |   |
|   |   |   | p |

35

P=

|   | p | p | p |
|---|---|---|---|
| p |   | p | p |
| p |   |   | p |
| p | p | p |   |

EP 4 216 109 A1

# FIG. 4

STORAGE ELEMENT — 210

| Wij (212) | FLAG (213) | 211 |

SELECTION CIRCUIT — 214

CONTROL UNIT — 10

FIG. 5

# FIG. 6

EP 4 216 109 A1

# FIG. 7

# FIG. 8

| INDEX | ROW GROUP | COLUMN GROUP |
|-------|-----------|--------------|
| 1 | 1 | 1 |
| 2 | 1 | 2 |
| 3 | 1 | 3 |
| 4 | 1 | 4 |
| 5 | 1 | 5 |
| 6 | 2 | 1 |
| 7 | 2 | 2 |
| 8 | 2 | 3 |
| 9 | 2 | 4 |
| 10 | 2 | 5 |
| 11 | 3 | 1 |
| 12 | 3 | 2 |
| 13 | 3 | 3 |
| 14 | 3 | 4 |
| 15 | 3 | 5 |
| 16 | 4 | 1 |
| 17 | 4 | 2 |
| 18 | 4 | 3 |
| 19 | 4 | 4 |
| 20 | 4 | 5 |
| 21 | 5 | 1 |
| 22 | 5 | 2 |
| 23 | 5 | 3 |
| 24 | 5 | 4 |
| 25 | 5 | 5 |

# FIG. 9

```
         ┌──────────┐
         │  START   │
         └──────────┘
               │
               ▼                    ┌─S1
   ┌────────────────────────────┐
   │ SET GROUP INDEX AND EXECUTE │
   │    INITIALIZATION PROCESS   │
   └────────────────────────────┘
               │
               ▼                    ┌─S2
   ┌────────────────────────────┐
   │      SET TEMPERATURE        │
   └────────────────────────────┘
               │
               ▼                    ┌─S3
   ┌────────────────────────────┐
   │    EXECUTE OPTIMIZATION     │
   │ PROCESSING ACCORDING TO TWO-│
   │   WAY ONE-HOT CONSTRAINT    │
   └────────────────────────────┘
               │
               ▼                    ┌─S4
          ╱──────────╲       YES
         ╱ HAS FALLEN  ╲───────────────┐
         ╲ INTO LOCAL  ╱               │
          ╲ SOLUTION? ╱                │
           ╲────────╱                  ▼                          ┌─S5
               │ NO           ┌─────────────────────────────┐
               ▼      ┌─S11    │  SELECT ROW GROUP AND COLUMN │
          ╱──────────╲        │  GROUP THAT HAVE VALUES TO BE│
         ╱  IS UPDATE  ╲      │   FORCIBLY TRANSITIONED AND  │
    NO  ╱OF STATE VARIABLE╲   │    MAKE TRANSITION OF VALUE  │
   ┌────╲IN SPECIFIED NUMBER╱  └─────────────────────────────┘
   │     ╲OF TIMES COMPLETED?╱             │
   │      ╲─────────────────╱              ▼                ┌─S6
   │           │ YES              ┌─────────────────────────┐
   │           ▼         ┌─S12     │   CHANGE TO RETURN MATRIX │
   │      ╱──────────╲            └─────────────────────────┘
   │     ╱IS TEMPERATURE╲                  │
  NO    ╱LOWERED SPECIFIED╲                ▼                ┌─S7
   │    ╲NUMBER OF TIMES? ╱        ┌─────────────────────────┐
   │     ╲───────────────╱          │  RECALCULATE LOCAL FIELD │
   │           │ YES               └─────────────────────────┘
   │           ▼                             │
   │     ┌──────────┐                        ▼                ┌─S8
   │     │   END    │              ┌─────────────────────────┐
   │     └──────────┘              │   EXECUTE OPTIMIZATION   │
   │                               │ PROCESSING FOR RETURNING │
   │                               │  TO STATE SATISFYING TWO-│
   │                               │   WAY ONE-HOT CONSTRAINT │
   │                               └─────────────────────────┘
   │                                         │
   │                                         ▼                ┌─S9
   │                                    ╱──────────╲
   │                              NO   ╱ IS TWO-WAY ╲
   │                          ┌───────╲ONE-HOT CONSTRAINT╱
   │                          │         ╲  SATISFIED?  ╱
   │                          │          ╲───────────╱
   │                          │               │ YES        ┌─S10
   │                          │               ▼
   │                          │    ┌─────────────────────────┐
   │                          │    │  RETURN TO OPTIMIZATION  │
   │                          │    │         MATRIX           │
   │                          │    └─────────────────────────┘
```

# FIG. 10

```
                    ┌─────────────┐
                    │    START    │
                    └─────────────┘
                           │
                           ▼                    ⌐S101
   ┌───────────────────────────────────────────────────┐
   │      SELECT INDEX j AND SPECIFY i, k, AND g       │
   └───────────────────────────────────────────────────┘
                           │
                           ▼                    ⌐S102
   ┌───────────────────────────────────────────────────┐
   │   READ hⱼ AND xⱼ, AND ALSO READ hᵢ, hₖ, AND h_g   │
   └───────────────────────────────────────────────────┘
                           │
                           ▼                    ⌐S103
   ┌───────────────────────────────────────────────────┐
   │                  CALCULATE ΔE                     │
   └───────────────────────────────────────────────────┘
                           │
                           ▼                    ⌐S104
   ┌───────────────────────────────────────────────────┐
   │                   ADD OFFSET                      │
   └───────────────────────────────────────────────────┘
                           │
                           ▼                    ⌐S105
   ┌───────────────────────────────────────────────────┐
   │                 SELECT INDEX q                    │
   └───────────────────────────────────────────────────┘
                           │
                           ▼                    ⌐S106
   ┌───────────────────────────────────────────────────┐
   │    SPECIFY GROUP INDEX OF INDICES p, r, AND s     │
   └───────────────────────────────────────────────────┘
                           │
                           ▼                    ⌐S107
   ┌───────────────────────────────────────────────────┐
   │   UPDATE LOCAL FIELD CORRESPONDING TO UPDATE OF   │
   │              INDICES p, q, r, AND s               │
   └───────────────────────────────────────────────────┘
                           │
                           ▼                    ⌐S108
   ┌───────────────────────────────────────────────────┐
   │               UPDATE WEIGHT VALUE                 │
   └───────────────────────────────────────────────────┘
                           │
                           ▼                    ⌐S109
   ┌───────────────────────────────────────────────────┐
   │   UPDATE STATE VARIABLES xₚ, x_q, xᵣ, AND x_s     │
   └───────────────────────────────────────────────────┘
                           │
                           ▼                    ⌐S110
   ┌───────────────────────────────────────────────────┐
   │         WRITE xᵢ AND hᵢ IN REGISTER               │
   └───────────────────────────────────────────────────┘
                           │
                           ▼
                    ┌─────────────┐
                    │     END     │
                    └─────────────┘
```

Step S101: SELECT INDEX j AND SPECIFY i, k, AND g

Step S102: READ $h_j$ AND $x_j$, AND ALSO READ $h_i$, $h_k$, AND $h_g$

Step S103: CALCULATE $\Delta E$

Step S104: ADD OFFSET

Step S105: SELECT INDEX q

Step S106: SPECIFY GROUP INDEX OF INDICES p, r, AND s

Step S107: UPDATE LOCAL FIELD CORRESPONDING TO UPDATE OF INDICES p, q, r, AND s

Step S108: UPDATE WEIGHT VALUE

Step S109: UPDATE STATE VARIABLES $x_p$, $x_q$, $x_r$, AND $x_s$

Step S110: WRITE $x_i$ AND $h_i$ IN REGISTER

# FIG. 11

START

↓

SELECT INDEX — S201

↓

CALCULATE ΔE — S202

↓

ADD OFFSET — S203

↓

SELECT INDEX TO BE UPDATED — S204

↓

UPDATE LOCAL FIELD CORRESPONDING TO UPDATE OF SELECTED INDEX — S205

↓

UPDATE WEIGHT VALUE — S206

↓

UPDATE STATE VARIABLE — S207

↓

WRITE IN REGISTER — S208

↓

END

Europäisches
Patentamt

European
Patent Office

Office européen
des brevets

# EUROPEAN SEARCH REPORT

Application Number

EP 22 20 5216

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | M. BAGHERBEIK ET AL: "A permutational Boltzmann machine with parallel tempering for solving combinatorial optimization problems", LECTURE NOTES IN COMPUTER SCIENCE, vol. 12269, 31 August 2020 (2020-08-31), pages 317-331, XP047560373, DOI: 10.1007/978-3-030-58112-1_22 * sections 2-4 * | 1-8 | INV. G06N5/01 G06N7/01 ADD. G06Q10/047 |
| A | M. BAGHERBEIK ET AL: "Caching and vectorization schemes to accelerate local search algorithms for assignment problems", PROCEEDINGS OF THE 2021 IEEE CONGRESS ON EVOLUTIONARY COMPUTATION (CEC'21), 28 June 2021 (2021-06-28), pages 2549-2558, XP033957597, DOI: 10.1109/CEC45853.2021.9504700 * the whole document * | 1-8 | |
| A | H. Nakayama et al: "Description: third generation digital annealer technology", Fujistsu research articles, 2021, XP055953041, Retrieved from the Internet: URL:https://www.fujitsu.com/jp/documents/digitalannealer/researcharticles/DA_WP_EN_20210922.pdf [retrieved on 2022-08-19] * the whole document * | 1-8 | **TECHNICAL FIELDS SEARCHED (IPC)** G06N G06Q |

-/--

The present search report has been drawn up for all claims

| Place of search | Date of completion of the search | Examiner |
|---|---|---|
| The Hague | 27 May 2023 | Douarche, Nicolas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

## EUROPEAN SEARCH REPORT

Application Number

EP 22 20 5216

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,P | M. BAGHERBEIK ET AL: "MAQO: a scalable many-core annealer for quadratic optimization", PROCEEDINGS OF THE 2022 IEEE SYMPOSIUM ON VLSI TECHNOLOGY AND CIRCUITS (VLSI TECHNOLOGY AND CIRCUITS'22), 12 June 2022 (2022-06-12), pages 76-77, XP034154236, DOI: 10.1109/VLSITECHNOLOGYANDCIR46769.2022.9830468 * figures 1-4 * | 1-8 | |

TECHNICAL FIELDS
SEARCHED      (IPC)

The present search report has been drawn up for all claims

| Place of search | Date of completion of the search | Examiner |
|---|---|---|
| The Hague | 27 May 2023 | Douarche, Nicolas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019121137 A
- JP 2020205049 A